# EUROPEAN PATENT APPLICATION

(11) **EP 4 790 921 A1**
(43) Date of publication of application: **12.08.2026**
(21) Application number: 25156843.2
(22) Date of filing: 10.02.2025
(51) Int. Cl.: H04B 10/112, H04B 10/118

(54) **PHOTONIC INTEGRATED CIRCUIT FOR BIDIRECTIONAL OPTICAL COMMUNICATION WITH POINT-AHEAD ANGLE**

(71) Applicant: Nederlandse Organisatie voor toegepast- natuurwetenschappelijk onderzoek TNO, 2595 DA 's-Gravenhage (NL)
(72) Inventor: COGNÉE, Kévin Georges Guy, 2595 DA 's-Gravenhage (NL)
(74) Representative: V.O.

(57) **Abstract**

An optical system (1000) and method for bidirectional free-space optical, FSO, communication with a point-ahead angle (PAA) between a received, Rx, FSO beam and a transmitted, Tx, FSO beam. A coupler assembly (10) is configured to couple a set of optical signals (St,Sr) corresponding to the FSO beams into and out of respective waveguides (15) of a photonic integrated circuit, PIC, (100). The PIC (100) comprises a photonic processor (20) configured to apply a set of optical transformations on at least some of the set of optical signals (St,Sr). In particular, the photonic processor (20) is controllable to adjust the point-ahead angle (PAA) between the Tx and Rx FSO beams by adapting one or more of the set of optical transformations.

## Description

### TECHNICAL FIELD AND BACKGROUND

The present disclosure relates to optical communication systems, and more particularly to free-space optical communication systems for bidirectional data transmission between terminals that are moving relative to each other, such as between satellites or between ground stations and satellites.

Free-space optical (FSO) communication systems may enable high-bandwidth data transmission between two terminals via an optical beam traveling through free space. A reliable FSO link requires that the two terminals accurately direct their beams toward each other such that each terminal's transmit (Tx) beam is received by the other terminal. In particular, each terminal must point with an accuracy that is tighter than the divergence angle of its beam - otherwise, the signal may be lost or suffer excessive losses. This challenge becomes especially pronounced when the separation between terminals is large. Because of the finite speed of light and the relative motion of the terminals, there can be an angular offset between the direction in which one terminal must transmit and the direction from which it receives. This offset is referred to as a point-ahead angle.

A typical example of this issue may occur in satellite communications, such as a link between a ground station and a satellite, or between two satellites. For low Earth orbit (LEO) satellites, the required point-ahead angle can be on the order of tens of microradians (grad), comparable to or exceeding the usual beam divergence of 1-10 grad. If this angular offset is not appropriately introduced and maintained, the transmitted beam may fail to overlap with the receiving aperture, causing a serious reduction in link performance or a complete loss of communication.

One solution may involve spatially separating Tx and Rx beams within each terminal and employing mechanical actuators (such as a fine steering mirror) to add and control the point-ahead angle between the incoming and outgoing beams. Different wavelengths are frequently used for Tx and Rx to facilitate isolation, and the two signals are typically split using a bulk optical component (e.g., a wavelength filter and/or dichroic mirror). Unfortunately, this solution may impose constraints on mechanical stability, add weight and size to the assembly, and demand precise alignment tolerances that can be difficult to manage, particularly in spaceborne systems.

There is a need for further improvement of optical systems and methods to alleviate problems associated with the known solutions, while maintaining at least some of their advantages.

### SUMMARY

Aspects of the present invention can be embodied as optical systems and methods for bidirectional free-space optical (FSO) communication with a point-ahead angle (PAA) between a received (Rx) FSO beam and a transmitted (Tx) FSO beam. A photonic integrated circuit (PIC) may integrate key optical functionalities for controlling the point-ahead angle. By incorporating a coupler assembly and photonic processor on the PIC, dynamic point-ahead angle control may be achieved while reducing system complexity and size compared to conventional bulk optical solutions. In particular, the coupler assembly may be configured to couple optical signals corresponding to the FSO beams into and out of respective waveguides on the PIC, while the photonic processor applies controllable optical transformations to these signals to adjust the point-ahead angle.

The present systems and methods may achieve various advantages over conventional solutions. For example, by implementing point-ahead angle control in the photonic domain rather than through mechanical actuation, improved stability and reduced sensitivity to vibration and thermal effects can be obtained. Furthermore, the integration of multiple optical functions onto a single PIC may reduce the overall size, weight, and complexity of the optical terminal. Furthermore, continuous and precise control of the point-ahead angle can be achieved without the alignment tolerances typically associated with bulk optical components.

The photonic processor preferably includes tunable components such as phase shifters, interferometers, or other beamforming elements that can be electronically controlled to modify the optical transformations applied to the signals. By also including a filter assembly, preferably integrated at least partially on the PIC, optical signals corresponding to the Tx and Rx beams can be effectively separated. For example, combining multiple stages of integrated wavelength filtering may achieve desired isolation levels between Tx and Rx signals while maintaining a compact form factor. By controlling an optical field distribution, e.g. at the interface between the PIC and free space and/or at a focal plane of a telescope, the point-ahead angle can be dynamically adjusted. For example, such control be achieved through interferometric combinations of guided modes or waveguide signals, where relative phases and amplitudes are tuned to correspond with optimal field patterns for transmission and/or reception.

The coupler assembly may be implemented in various configurations to optimize performance for different applications. In preferred embodiments, one or more multimode couplers may support multiple guided modes as signal components, enabling beam shaping through controlled mode interference. For example, a slab edge coupler with integrated mode multiplexing/demultiplexing capabilities may enable separate control of beam position and shape through control over the amplitude and/or phase of different order modes. In other preferred embodiments, a slab grating coupler with curved grating lines may be configured for normal incidence coupling of both Tx and Rx FSO beams, wherein a sub-diffraction fast converging waveguide superlattice connects the slab grating to the photonic processor for generating and receiving the beams without diffraction orders. Yet other or further embodiments may employ arrays of single-mode or multimode couplers to achieve the desired beam control.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1A illustrates bidirectional FSO communication between two terminals with a point ahead angle PAA between a transmitted Tx beam and received Rx beam;
FIG 1B illustrates an optical system wherein the point ahead angle PAA is mechanically controlled;
FIG 1C illustrates an optical system wherein the point ahead angle PAA is controlled on-chip by a photonic integrated circuit (PIC);
FIG 2 illustrates further details of a communication optical system comprising a PIC;
FIG 3A-3D illustrate examples of controlling optical field distributions which may be used for controlling the point-ahead angle;
FIG 4 illustrates an embodiment of a PIC comprising a slab edge coupler;
FIG 5 illustrates an embodiment of a PIC comprising a slab grating coupler;
FIG 6 illustrates an embodiment of a PIC comprising an array of discrete optical couplers; and
FIG 7 illustrates an embodiment of a PIC comprising an array of multimode couplers optically coupled to a microlens array.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

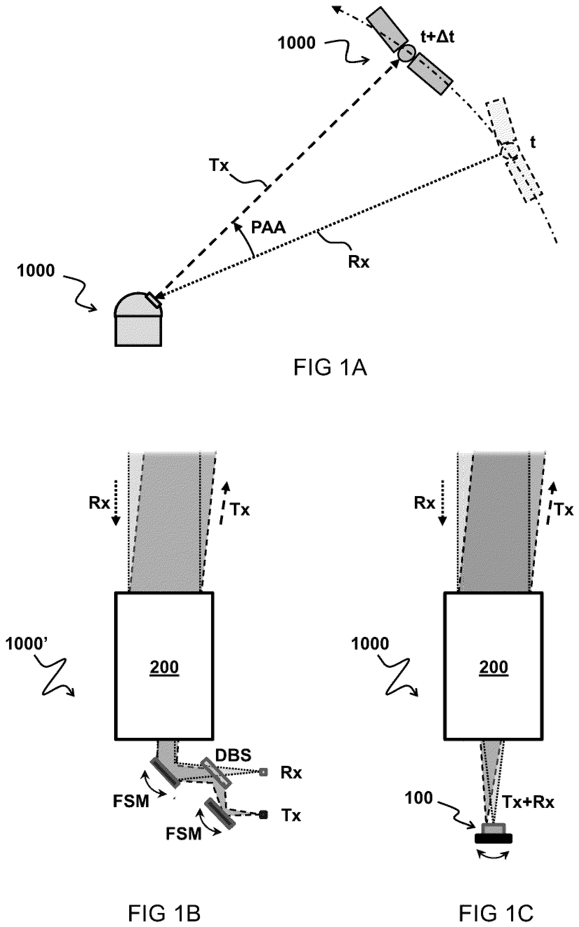

FIG 1A illustrates bidirectional FSO communication between two terminals 1000 with a point ahead angle PAA between a transmitted Tx beam and received Rx beam. In some embodiments, each optical system 1000 is configured to send an outgoing Tx beam in a target direction so that it arrives at a target location of a respective target terminal whose relative position changes during a transmission time of the beam. In other or further embodiments, each optical system 1000 is configured to receive an incoming Rx beam from a source direction which depends on a source position that a respective source terminal was located at, at the time of sending the Rx beam. When Tx and Rx beams are sent between a pair of terminals 1000 which are moving relative to each other at a relatively large (tranverse) velocity and/or at relatively large distance from each other, it may be necessary to set a point-ahead angle between the Tx and Rx beams. In particular, the point-ahead angle PAA may refer to an angular offset between the direction of the Tx beam and the direction of the incoming Rx beam.

In a preferred embodiment, each optical system 1000 is a free-space optical (FSO) communication terminal capable of bidirectional FSO communication with a point-ahead angle PAA between a received (Rx) FSO beam and a transmitted (Tx) FSO beam. In one embodiment, e.g. as shown, the optical system 1000 as described herein is part of a ground-based communication station configured to optically communicate with a satellite in orbit. In another or further embodiment, the optical system 1000 as described herein is part of a satellite in orbit configured to optically communicate with a ground-based station, or other satellite.

FIG 1B illustrates an optical system 1000' wherein the point ahead angle PAA is mechanically controlled. Typically, the PAA may be controlled using bulk optical components such as one or more fine steering mirrors (FSM) arranged in a path of the beams traveling through free space. The paths of the Rx and Tx beams may be separated (in free space) using bulk optical elements, such as beam splitters or wavelength-selective filters. For example, a first mirror can be used to maximize coupling of the Rx beam into a photodetector, while a second mirror can be used to introduce an angular offset for the Tx beam to reach the remote terminal. Typically, light from the Rx beam may be collected and focused by a telescope 200 which may include a set or lenses and/or mirrors to project the light onto a detector element of a receiver (Rx) module. Similarly, light generated by a transmitter (Tx) module may be emitted towards a telescope with transmits the Tx beam, e.g. as a collimated beam, to the target location. Preferably, the same telescope 200 is used for receiving the Rx beam and transmitting the Tx beam. Alternatively, or in addition, separate telescopes may be used for the Rx and Tx beams, and/or different optical elements may arranged along at least part of distinct paths of the Tx and Rx beams.

FIG 1C illustrates an optical system 1000 wherein the point ahead angle PAA is controlled on-chip by a photonic integrated circuit (PIC) 100. In this preferred embodiment, key optical functionalities may be integrated into the PIC 100. For example, at least part of the Tx and Rx optical paths may be routed on-chip. In some embodiments, e.g. as shown, the PIC 100 may be coupled to a telescope 200 that collects the incoming Rx beam and transmits the outgoing Tx beam. Preferably, the PAA between the Tx and Rx beams is controlled on the PIC 100. For example, one or more tunable elements on the PIC 100, such as phase shifters, interferometers, or other beamforming components, may reshape or redirect the Tx beam at an angular offset relative to the Rx beam. Preferably, the PIC 100 further includes one or more filtering components configured to separate the Tx and Rx signals internally. By implementing this on-chip control, the overall optical system 1000 may exhibit reduced alignment complexity, lower mass, and potentially higher mechanical stability compared to designs with multiple mechanical actuators. For instance, the PIC 100 may be mounted on a simple motion stage that provides coarse pointing adjustments, whereas the fine-tuning of the PAA is performed in the photonic domain. Such approaches can be equally beneficial for ground-based stations and satellites, both benefitting from a dynamically adjustable PAA for long-range or fast-moving communication links.

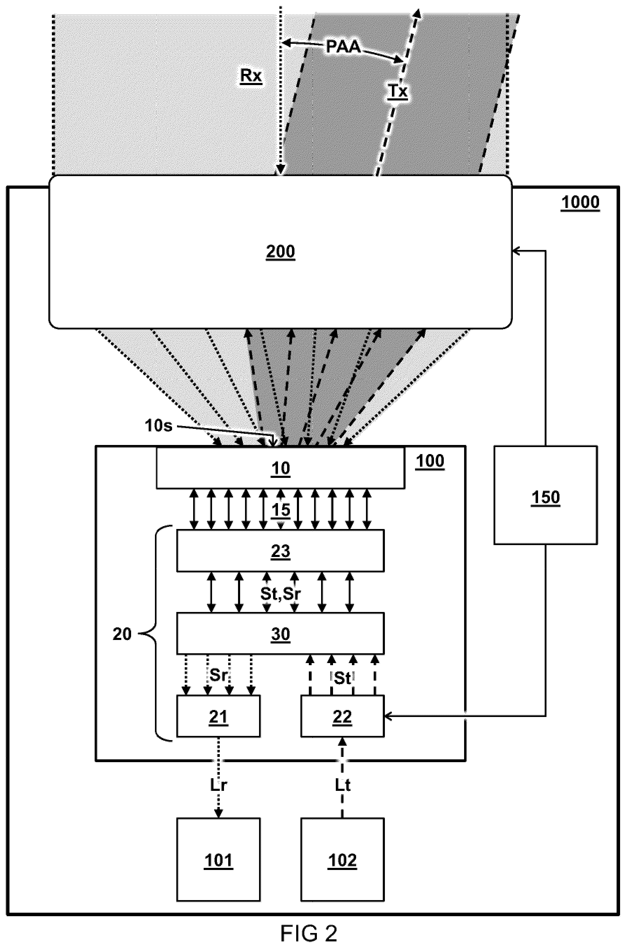

FIG 2 illustrates further details of a communication optical system 1000 comprising a PIC 100. In some embodiments, the optical system 1000 comprises, or optically couples to, a telescope 200. Preferably, the telescope 200 is optically coupled to the PIC 100. In some embodiments, the telescope 200 is configured to collect an incoming Rx FSO beam. In other or further embodiments, the telescope 200 is configured to direct an outgoing Tx FSO beam. Preferably, the telescope 200 is configured to collimate the Tx FSO beam for transmission over a long-range free-space optical path. In some embodiments (not shown), multiple telescopes may be used, with separate telescopes for Rx and Tx beams respectively.

As described herein, the PIC 100 comprises a coupler assembly 10. In some embodiments, the coupler assembly 10 has at least one optical interface 10s, e.g. optical coupling surface suitable for coupling light into and/or out of the PIC 100. Preferably, the same optical interface 10s is used for both receiving light of the Rx beam and emitting light of the Tx beam. Most preferably, the optical interface 10s is integrated as part of the PIC 100. In one embodiment, the telescope 200 is optically coupled to the at least one optical interface 10s. In another or further embodiment, the telescope 200 is optically coupled to one or more intermediate optical elements, such as a lens, at least some of which may be integrated with the PIC 100. It can also be envisaged that the coupler assembly 10 has multiple optical interfaces, at least some of which may be used to receive and transmit light forming the Rx and Tx beams. In some embodiments, the optical interface 10s is configured to couple optical signals between free space and a set of waveguides 15 on the PIC 100. In some embodiments, the optical interface 10s comprises a grating structure. In other or further embodiments, the optical interface 10s comprises an edge coupler, with optional lens. In yet other or further embodiments, the optical interface 10s comprises an antenna structure. Alternatively, or in addition to, the optical interface 10s, also other or further ways of coupling light into and/or out of the PIC may be envisaged, such as via one or more optical fibers connected to the PIC.

As described herein, the PIC 100 comprises a photonic processor 20. Preferably, the photonic processor 20 is configured to apply a set of optical transformations on at least some of the optical signals St,Sr corresponding to the FSO Tx beam and/or FSO Rx beam. For example, the photonic processor 20 may apply the optical transformations to (combinations of) different components or modes forming the FSO Tx beam and/or FSO Rx beam. Most preferably, the photonic processor 20 is configured to apply a set of linear optical transformations, e.g. wherein the output signal(s) is/are a linear combination of input signal(s).

In one embodiment, the set of optical transformations comprises scaling or modulating the amplitude of one or more optical signals. For example, the amplitude may be controlled using a variable attenuator and/or amplitude modulator. In another or further embodiment, the set of optical transformations comprises shifting a (relative) phase of one or more of the optical signals. For example, the (relative) phase may be controlled using a (variable) phase shifter. In some embodiments, the set of optical transformations comprises combining and/or splitting of optical signals. For example, signals may be combined and/or split using a multimode interferometer (MMI), directional coupler, and/or a beam splitter. In other or further embodiments, the set of optical transformations comprises coupling between different spatial or guided modes, such as in mode multiplexers/demultiplexers or mode converters. In general, arbitrary linear transformations may be applied on a set of input optical signals, e.g. using a photonic processor composed of tunable Mach-Zehnder interferometers.

It will be understood that the photonic processor 20 may comprise multiple optical components that may cooperate to perform various functionalities. Components of the photonic processor 20 may be physically and/or functionally divided into different parts. In some embodiments, the photonic processor 20 comprises a Rx part 21 used for routing received optical signals Sr to an Rx module 101. In other or further embodiments, the photonic processor 20 comprises a Tx part 22 used for routing transmitted optical signals St from a Tx module 102. In some embodiments, the Rx part 21 and Tx part 22 may be partially or fully integrated with each other. Preferably, at least one of the Rx part 21 and Tx part 22 is configured to exclusively process transmitted optical signals St without affecting received optical signals Sr, or vice versa. In this way, components of one of the Tx FSO beam and Rx FSO beam may be adjusted without affecting the other. Alternatively, at least some of the set of optical transformations may affect both beams in the same way, or may affect the different beams in different ways (e.g. due to a different wavelength of the beams). In some embodiments, the photonic processor 20 comprises a common part 23 used for routing both received signals Sr and transmitted signals St. In yet other or further embodiments, the common part 23 may be omitted, with the filter assembly 30 being arranged immediately after the waveguides 15.

In some embodiments, the photonic processor 20 comprises one or more active amplitude modulators. These may be implemented using various physical mechanisms. In one embodiment, variable optical attenuators are employed, wherein localized absorption or interference effects are used to control the optical power in the waveguide. In another or further embodiment, semiconductor optical amplifiers are implemented to provide controllable gain, allowing for both amplification and attenuation of the optical signals. In other or further embodiments, the photonic processor 20 comprises one or more active phase shifters. These may also be implemented using various physical mechanisms, possibly in combination with the one or more active amplitude modulators. In one embodiment, thermo-optic phase shifters are employed, wherein localized heating elements modify the refractive index of the waveguide material to induce controlled phase shifts. In another or further embodiment, carrier-injection phase shifters are implemented in semiconductor materials, allowing for faster modulation speeds compared to thermal approaches. Of course, also other or further types of phase shifters may be used, such as Pockels-based, MEMS, strain-based (such as piezo-based), et cetera. Preferably, the photonic processor (20) comprises one or more Mach-Zehnder interferometers (MZI), which may be configured to function as both amplitude modulators and phase shifters.

In a preferred embodiment, optical system 1000 and/or the PIC 100 comprises a filter assembly 30 configured to separate Tx optical signals and Rx optical signals. Preferably, the filter assembly 30 is integrated with the PIC 100. In some embodiments, the filter assembly 30 may be partially or fully arranged separate from the PIC 100. In some embodiments, the filter assembly 30 comprises wavelength-selective elements. In other or further embodiments, the filter assembly 30 comprises interferometric elements. In yet other or further embodiments, the filter assembly 30 comprises resonant structures. In some embodiments, the photonic processor 20 itself may perform the filtering function of the filter assembly 30.

In some embodiments, the filter assembly 30 comprises multiple stages of wavelength filtering to achieve the required isolation between Tx and Rx signals. For example, a first filter stage may comprise an asymmetric Mach-Zehnder interferometer (AMZI) configured to provide initial wavelength separation, followed by a second stage comprising a Bragg filter and/or micro-ring resonators for further enhanced wavelength selectivity. In other or further embodiments, the filter assembly 30 comprises a cascaded arrangement of filters where each successive stage provides additional suppression of unwanted wavelengths. Preferably, the filter assembly 30 is designed to provide at least 60dB isolation between Tx and Rx wavelengths to prevent degradation of the received signal quality due to scattered light from the typically stronger Tx signals. In some embodiments, the filter assembly 30 comprises tunable elements, such as thermo-optic phase shifters or electro-optic modulators, allowing dynamic adjustment of the filter response to accommodate wavelength variations due to environmental factors, correction of chromatic effects (such as the Doppler effect), and/or to enable wavelength reconfiguration for different communication protocols. Most preferably, the filter assembly 30 includes monitoring photodetectors at strategic locations to enable active feedback control of the filtering elements, ensuring optimal wavelength separation is maintained during operation.

In some embodiments, the optical system 1000 comprises a controller 150. Preferably, the controller 150 is configured to control one or more tunable optical components of the photonic processor 20. In some embodiments, the controller 150 controls tunable optical components in the Tx part 22 to adjust the point-ahead angle PAA of the Tx beam by adapting one or more of the optical transformations applied to the transmitted optical signals St. In other or further embodiments, the controller 150 controls tunable optical components in the Rx part 21 to optimize how the Rx beam is received, for example, to optimize the resulting light signal Lr for a particular angle of incidence. In yet other or further embodiments, the controller 150 controls tunable optical components in the common part 23 to affect both the transmitted signals St and received signals Sr.

In some embodiments, the controller 150 is configured to implement interferometric signal processing methods for measuring and controlling the point-ahead angle. For example, the controller may utilize homodyne detection, where the signal is mixed with a local oscillator at the same frequency, intradyne detection, where the local oscillator frequency is close but not exactly matched to the signal frequency, or heterodyne detection, where the local oscillator has a significant frequency offset from the signal.

In some embodiments, the same or other controller may control part of the telescope 200. For example, the controller may control mechanical components such as a fine steering mirror FSM to adjust the general or coarse direction of one or both beams simultaneously. In some embodiments, the controller 150 may dynamically adjust the PAA based on changes in relative position and/or velocity between the optical system 1000 and a remote terminal.

In some embodiments, the optical system 1000 comprises, or couples to, an Rx module 101. Preferably, the Rx module 101 is configured to detect and process the received optical signals Sr routed by the Rx part 21 of the photonic processor 20. For example, the Rx module 101 comprises at least one photodetector and associated processing circuitry for extracting data encoded in the Rx FSO beam. In one embodiment, at least part of the Rx module 101 may be integrated as part of the PIC 100. For example, a photo-detecting element may be integrated with the PIC 100 while electronic parts may be external and connected to the PIC 100. In another embodiment, the Rx module 101 may be separate from the PIC 100, optically coupled, e.g. connected via an optical fiber, to measure output light Lr from the PIC 100.

In some embodiments, the optical system 1000 comprises a Tx module 102. Preferably, the Tx module 102 is configured to generate the transmitted optical signals St that are routed by the Tx part 22 of the photonic processor 20. In some embodiments, the Tx module 102 comprises at least one light source, e.g. laser and/or diode, and associated modulation circuitry for encoding data onto the Tx FSO beam. In one embodiment, at least part of the Tx module 102 may be integrated as part of the PIC 100. For example, a laser source and/or modulator may be integrated with the PIC 100 while electronic control parts may be external and connected to the PIC 100. In another embodiment, the Tx module 102 may be separate from the PIC 100, optically coupled, e.g. connected via an optical fiber, to provide input light Lt to the PIC 100.

As will be understood, the Tx module 102 may be configured to generate optical signals St with properties suitable for long-range free-space optical communication, such as appropriate wavelength, power level, and modulation format. In some embodiments, the Tx module 102 may include optical amplifiers to boost the signal power before transmission. In other or further embodiments, the Tx module 102 comprises one or more wavelength multiplexers when multiple wavelength channels are used for transmission. In one embodiment, the controller 150, or another controller, may control operational parameters of the Tx module 102, such as laser power, wavelength, or modulation characteristics.

In some embodiments, the Tx module comprises at least one IQ modulator configured to implement Quadrature Amplitude Modulation (QAM) for the optical data transmission signal Lt. For example, the IQ modulator may comprise a nested Mach-Zehnder interferometer structure with separate arms for modulating the in-phase (I) and quadrature (Q) components, where each arm includes phase shifters and amplitude modulators. In a dual-polarization configuration, two separate IQ modulators may be used to independently modulate orthogonal polarization states, effectively doubling the data capacity. In other or further embodiments, the Rx module may comprise a coherent detection system including a 90-degree optical hybrid and balanced photodetectors for each polarization state. For example, the optical hybrid may mix the received signal with a local oscillator to enable detection of both amplitude and phase information. Of course, also other or further optical communication standards may be used.

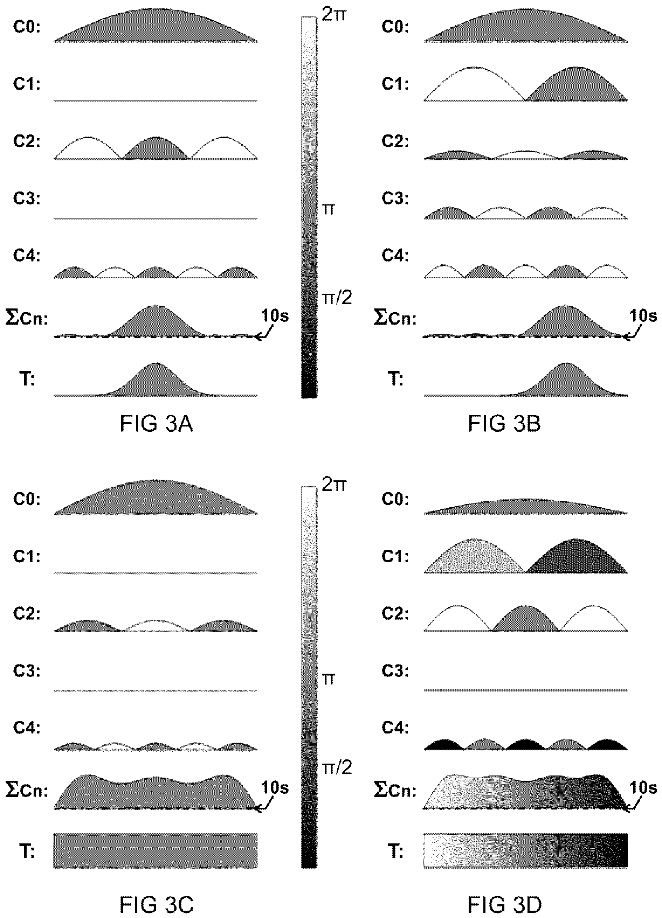

FIGS. 3A-3D illustrate examples of controlling optical field distributions which may be used for controlling the point-ahead angle. In the embodiments shown, a set of signal components C0-C4 are controlled to generate different optical field distributions at the optical interface 10s. While the present figures show five components, of course also more (or fewer) components may be used. For example, the signal components may correspond to different modes and/or signals routed through different waveguides of the PIC. In particular example, the signal components may correspond to different order transverse electric (TE) modes supported at the optical interface 10s. A resulting field distribution ΣCn at the optical interface 10s may formed by an interferometric combination of the signal components

In some embodiments, the photonic processor 20 comprises a set of tunable optical components that are controllable to determine a set of optical transformations being applied to respective signal components C0-C4 of the set of optical signals St,Sr. For example, a combination ΣCn of the respective signal components C0-C4 may correspond to an optical field distribution at an optical interface 10s of the coupler assembly 10, as illustrated in each of FIGS. 3A-3D.

In some embodiments, the respective signal components C0-C4 of the Tx optical signals St are controlled to optimize a correspondence between a resulting optical field distribution at the optical interface 10s and a target optical field distribution T corresponding to the Tx FSO beam being emitted at an angle of emission corresponding to the point-ahead angle PAA. For example, as shown in FIG 3B, the signal components may be controlled to shift the resulting distribution ΣCn relative to a centered distribution shown in FIG 3A.

In other or further embodiments, the respective signal components C0-C4 of the Rx optical signals Sr are controlled to optimize measurement of an incident optical field distribution at the optical interface 10s corresponding to the Rx FSO beam being received at an angle of incidence, wherein a difference between the angle of emission and the angle of incidence corresponds to the point-ahead angle PAA.

In some embodiments, a respective phase and/or amplitude of each of the respective signal components C0-C4 is controlled to interferometrically combine the respective signal components C0-C4 at the optical interface 10s to create the resulting optical field distribution for generating the Tx FSO beam and/or to optimize detection of the incident optical field distribution of the Rx FSO beam. For example, a scale bar between the figures indicates relative phase values from n/2 to 2π for the signal components in each figure.

In some embodiments, the angle of emission of the Tx FSO beam is controlled by controlling a (spatial) intensity distribution of the optical field at the optical interface 10s. For example, as illustrated in FIG 3B compared to FIG 3A, an intensity distribution of the optical field (e.g. amplitude of the electric field) may be shifted to control the position of a light spot along the optical interface 10s. By shifting the position of the light spot at the optical interface 10s, the angle of emission of the resulting Tx FSO beam may also shift. For example, the optical interface 10s may be optically coupled to one or more lenses and/or curved mirrors [e.g. telescope 200] to project the light spot as the Tx FSO beam. Preferably, the optical interface 10s is placed at a focal plane of the telescope 200. In this way, the controllable light spot may act as a focal spot which may be projected as a collimated Tx FSO beam by the telescope.

In other or further embodiments, the angle of emission of the Tx FSO beam is controlled by controlling a (spatial) phase distribution of the optical field at the optical interface 10s. For example, as illustrated in FIG 3D compared to FIG 3C, a phase distribution of the optical field [e.g. relative phases of the electric field] may be generated to have a gradient. The gradient phase distribution may result in a tilted wavefront of light being emitted from the optical interface 10s. Increasing or decreasing the phase gradient may thus result in an increased or decreased angle of emission, respectively. Accordingly, the direction of the Tx FSO beam may be controlled.

In yet other or further embodiments, combinations of controlling the intensity distribution and phase distribution may be used. In general, an ideal spatial and/or phase distribution may be a distribution corresponding to a collimated beam projected at the other side of the telescope. For example, this may correspond to an impulse response measured at the optical interface 10s resulting from a collimated beam being received by the telescope, wherein an angle of incidence of the received collimated beam corresponds to a desired angle of emission of a collimated Tx FSO beam.

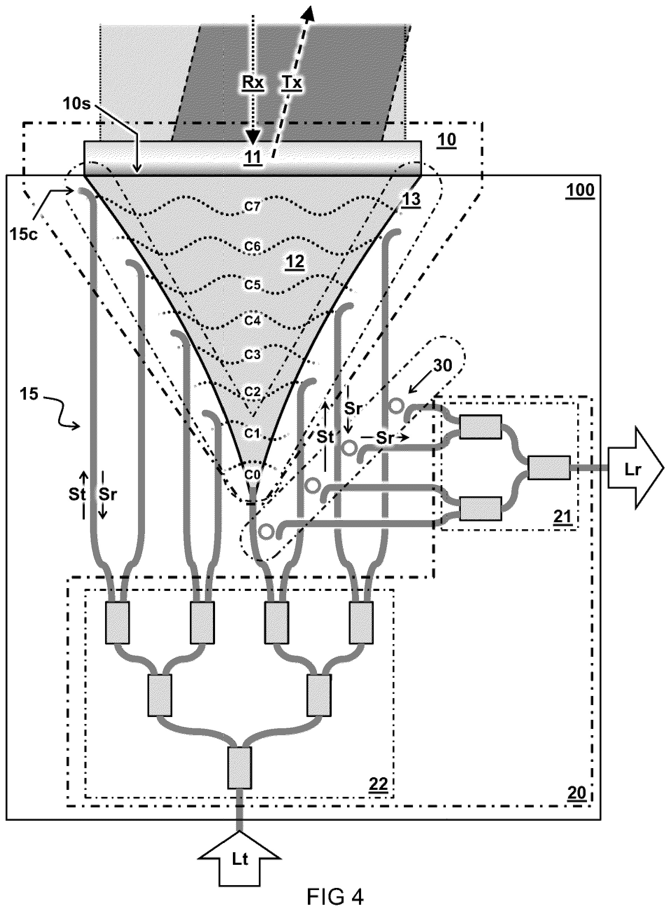

FIGs 4 - 7 show different embodiments to illustrate various details of possible aspects and configurations of the PIC 100.

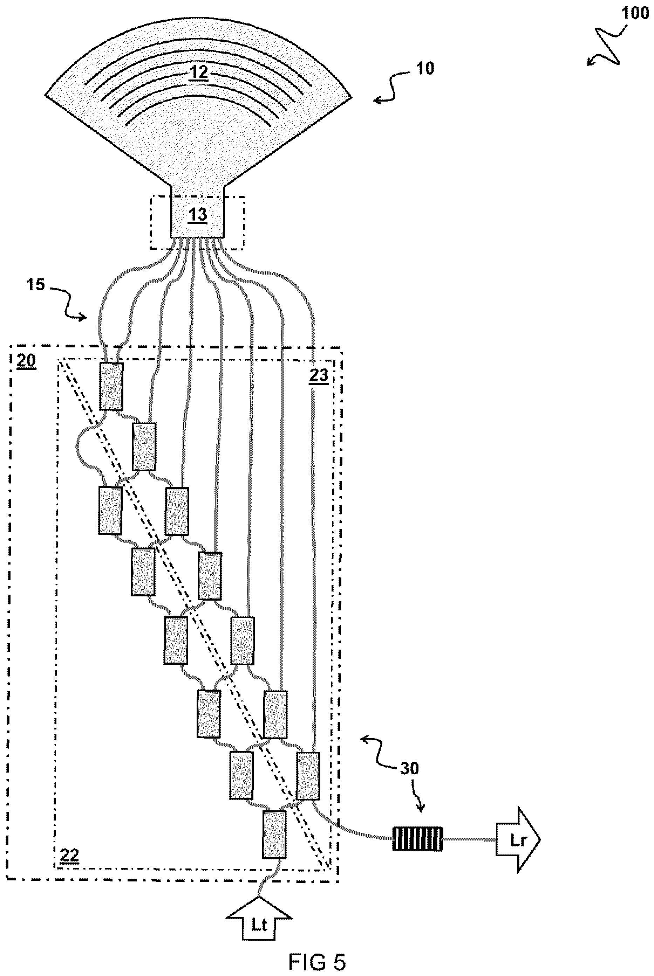

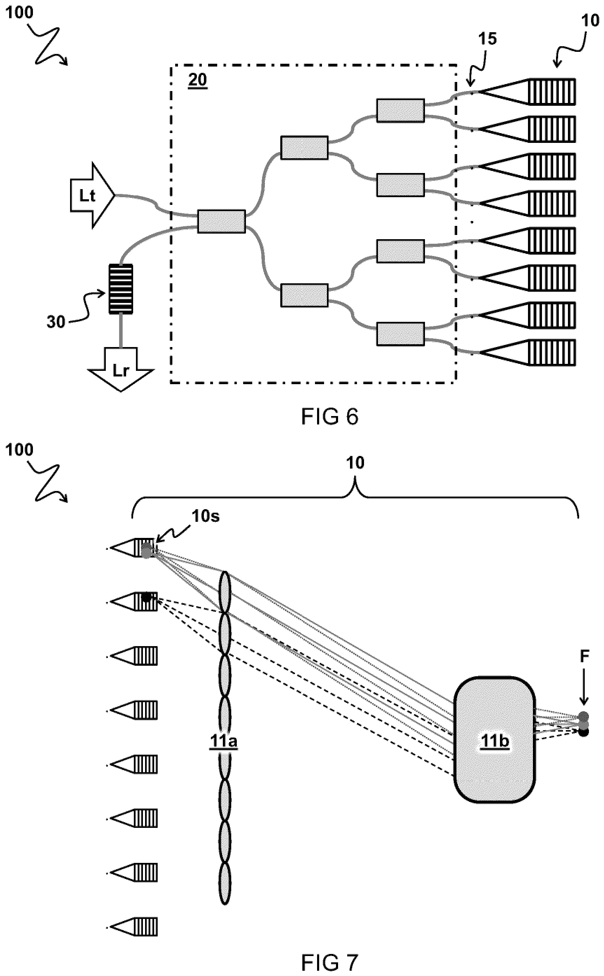

In some embodiments, e.g. as shown in FIGs 4 or 5, the coupler assembly 10 comprises a multimode coupler 12. The coupler assembly 10 may also comprise a plurality of multimode couplers, e.g. as shown in FIG 7. In other or further embodiments, e.g. as illustrated in detail for FIG 4, the coupler assembly 10 comprises a mode multiplexer/demultiplexer 13. Preferably, the multimode coupler 12 is configured to support a plurality of guided modes as signal components Cn of the Tx FSO beam and/or Rx FSO beam. In such embodiments, the mode multiplexer/demultiplexer 13 may be configured to couple different guided modes of the multimode coupler 12 into and/or out of different waveguides 15 of the PIC 100. Typically, the guided modes comprise transverse electric (TE) modes of different orders.

In some embodiments, e.g. as shown in FIG 4, the mode multiplexer/demultiplexer 13 comprises a set of evanescent couplers 15c configured to selectively couple different order modes between the multimode coupler 12 and the respective waveguides 15. In other or further embodiments, e.g. as shown in FIG 5, one or more waveguides may be directly connected to the multimode coupler 12, wherein a spatial configuration of the connections may determine mode selectivity.

Preferably, the coupler assembly 10 comprises an optical interface 10s that comprises a coupling surface of the multimode coupler 12, wherein the coupling surface is arranged to couple light between the guided modes and free space. In such embodiments, an optical field distribution at the optical interface 10s may correspond to an interferometric combination of the guided modes. Most preferably, the photonic processor 20 is configured to control relative phases and/or amplitudes of the guided modes via the respective waveguides 15 to shape the optical field distribution at the coupling surface to adjust the point-ahead angle PAA between the Tx and Rx FSO beams.

In some embodiments, the multimode coupler 12 is configured to support a set of even-order modes and a set of odd-order modes as part of the plurality of guided modes. Preferably, the mode multiplexer and/or demultiplexer 13 is configured to separate and/or combine each mode of the plurality of guided modes into and/or out of a respective waveguide 15. For example, the photonic processor 20 is configured to control relative contributions of at least the odd-order modes, and preferably also the even-order modes. For example, this may be used to control, e.g. shift, a position and/or phase of the optical field distribution along the coupling surface. In this way the angle of emission of the Tx FSO beam may be controlled and/or a detection of the Rx FSO beam received at an angle of incidence corresponding to the point-ahead angle may be optimized. Alternatively, or in addition, the photonic processor 20 is configured to use only the even-order modes to determine a shape of the optical field distribution along the coupling surface. For example, this may be used to optimize coupling efficiency between the guided modes and a target field distribution corresponding to an Rx FSO beam which is received with an angle of incidence that is perpendicular to the optical interface 10s and inside the symmetry plane of the optical interface 10s; or corresponding to a Tx FSO which is transmitted from the optical interface 10s with an angle of emission that is perpendicular to the optical interface 10s and inside the symmetry plane of the optical interface 10s.

In some embodiments, e.g. as shown in FIG 4, the coupler assembly 10 comprises a multimode coupler in the form of a slab edge coupler. Preferably, the slab edge coupler comprises a slab waveguide configured to support a plurality of guided modes as signal components (e.g. C0-C7) of the Tx FSO beam and/or Rx FSO beam. For example, the mode multiplexer/demultiplexer 13 comprises at least one adiabatic taper and evanescent couples 15c configured to extract a set of (e.g. lowest order) guided modes into respective waveguides 15. Preferably, the guided modes comprise transverse electric modes of different orders, wherein the mode multiplexer/demultiplexer 13 is configured to separate odd-order modes and even-order modes of the guided modes into different subsets of the set of waveguides 15.

In some embodiments, the coupler assembly 10 comprises an optical interface 10s that comprises an edge surface of the slab waveguide. Preferably, the edge surface is arranged to couple light between the guided modes and free space. In one embodiment, e.g. as shown, the optical system 1000 comprises a cylindrical lens optically coupled to the edge surface and configured to match a numerical aperture of the slab edge coupler with a telescope (not shown here). Most preferably, an optical field distribution at the optical interface 10s corresponds to an interferometric combination of the guided modes.

In some embodiments, the photonic processor 20 comprises a cascaded structure, e.g. tree, of Mach-Zehnder interferometers configured to control relative phases and/or amplitudes of the guided modes via the respective waveguides 15. Preferably, the tree of interferometers is configured to dynamically program the optical field distribution to match an impulse response of the telescope for a collimated Tx FSO beam at an angle corresponding to the point-ahead angle PAA. For example, even-order modes (C0,C2,C4,C6) of the guided modes may be configured to optimally couple the Rx FSO beam received at symmetric incidence.

It will be understood that symmetric incidence (or emission) may refer to the Rx beam (or Tx beam) propagating along a symmetry plane of the coupler assembly 10, e.g. optical interface 10s, such that it may predominantly or exclusively couple to even-order (symmetric) modes of the coupler assembly 10. This may be contrasted with asymmetric incidence (or emission) where the light beam may propagate at an angle relative to the symmetry plane of the coupler assembly 10, e.g. optical interface 10s, which may typically result in coupling to both even-order (symmetric) and odd-order (asymmetric) modes of the coupler assembly 10.

For example, in a slab edge coupler as shown in FIG 4, symmetric incidence or emission may refer to a respective light beam traveling along a plane perpendicular to the edge surface of the coupler, which may be in a plane of the PIC. For example, in a grating coupler such as shown in FIG 5, symmetric incidence or emission may refer to a respective light beam traveling along a symmetry plane of the optical interface 10s at an angle perpendicular to the grating lines, wherein this symmetry plane may extends through the subsequent waveguide structure. In some embodiments, the Rx beam (or Tx beam) may be received (or emitted) at normal incidence (or emission), which may represents a special case of symmetric incidence where the light beam is perpendicular to the PIC surface in all directions.

It will be understood that odd-order and even-order modes may refer to a symmetry of the spatial distribution of the optical field, in particular in a direction perpendicular to light propagation through the multimode coupler of the coupler assembly 10. For example, in a multimode waveguide supporting light propagating along its length, the mode order may describe how the optical field varies across a width of the waveguide, with even-order modes having a symmetric field distribution and odd-order modes having an antisymmetric field distribution about a central axis of the waveguide. In some embodiments, the mode order may describe field variations in multiple directions, such as both horizontal and vertical directions relative to the plane of the PIC, enabling two-dimensional control of beam direction. For example, modes may be characterized by two indices (m,n) describing their order in both directions, wherein each index may be even or odd. In such embodiments, the coupler assembly 10 may comprise waveguides arranged at different positions surrounding the optical interface to couple to different combinations of these two-dimensional modes. While a multimode coupler or waveguide may support multiple such modes simultaneously, these modes may be separated (or combined) and routed to (or from) individual single-mode waveguides. Typically, each single-mode waveguide may itself propagate light at the fundamental (TE00) mode.

As illustrated in FIG 4, the slab edge coupler may have a tapered shape that converges along the mode multiplexer/demultiplexer 13. The evanescent couplers 15c may be arranged along the sides of the tapered section to couple different order modes into separate waveguides 15. In some embodiments, the waveguides 15 carrying odd-order modes may be routed to one side of the PIC 100 while waveguides carrying even-order modes are routed to another side. The photonic processor 20 may comprise separate parts 21, 22 for processing Rx and Tx signals respectively, with appropriate filtering elements 30 arranged between them. Most preferably, the filter assembly 30 is configured to separate wavelengths corresponding to received signals Sr from wavelengths corresponding to transmitted signals St using wavelength-selective elements as part of the filter assembly 30 arranged along the waveguides 15. For example, in the embodiment shown, the wavelength-selective elements may include micro-ring resonators configured to pass one or more wavelengths of the Rx optical signals Sr towards the Tx part 22 of the photonic processor 20 while passing one or more wavelengths of the Tx optical signals St to the Rx part 21 of the photonic processor 20. Also other or further wavelength selective elements and/or filters may be included as part of the PIC 100, or outside, to ensure that the (much stronger) light Lt, as generated by Tx module (not shown here), does not compromise measurement of the light Lr, as measured by Rx module (not shown here). For example, an isolation of 60 dB, or more, may be typically needed between the Rx and Tx optical paths.

As further illustrated in FIG 4, source light Lt (to be used for optical transmission) may be fed into the photonic processor 20 of the PIC 100. For example, the source light Lt may be generated by the Tx module 101, as shown and described with reference to FIG 2. Furthermore, received light Lr from the Rx FSO beam may be output from the photonic processor 20 to be detected by the Rx module 102. In principle, (parts of) the Tx module 101 and/or Rx module 102 may also be integrated with the PIC 100.

In some embodiments, e.g. as shown in FIG 4, light received at the optical interface 10s is coupled into even-order modes of the slab coupler 12 when the Rx beam is received at symmetric incidence, e.g. inside the symmetry plane of the optical interface 10s. The even-order modes are then separated by the mode multiplexer and/or demultiplexer 13 and routed through respective waveguides 15 to the Rx part 21 of the photonic processor 20. Preferably, wavelength filtering elements in the filter assembly 30 are arranged to extract the received signals Sr from the waveguides 15 and route them through additional waveguides to be combined, for example using a cascaded MZI structure, e.g. an MMI tree, into the output light signal Lr. In some embodiments, phase shifters may be arranged along one or more of the waveguides to set a desired phase relation and/or compensate for possible fabrication limitation / errors, e.g. to optimize reception of the Rx beam at symmetric incidence, e.g. inside the symmetry plane of the optical interface 10s. Alternative to the embodiment shown, the photonic processor 20, e.g. the Rx part 21, may also be optimized for reception of the Rx beam at another angle than symmetric incidence. In this case, reception may be optimized by suitable combination of even and odd-ordered modes.

In some embodiments, e.g. as shown in FIG 5, the coupler assembly 10 comprises a slab grating coupler 12 configured for normal incidence coupling of both Tx and Rx FSO beams. Preferably, the slab grating 12 includes curved grating lines arranged to ensure perpendicular incidence of light regardless of the input angle controlled by a sub-diffraction phased array at the input of the grating. More preferably, the grating is designed with sufficient bandwidth to accommodate both Tx and Rx wavelengths at normal incidence. Most preferably, the grating is apodized to match the field distribution to the impulse response of a telescope (not shown here).

In some embodiments, the coupler assembly 10 comprises a sub-diffraction fast converging waveguide superlattice (e.g. acting as a multiplexer / demultiplexer 13) that connects the slab grating 12 to the photonic processor 20. For example, the superlattice is configured to generate/receive the Tx/Rx beams in a trapezoidal section without diffraction orders, and expand to N independent waveguides 15 with minimal cross-coupling between waveguides in the sub-diffraction section.

In the embodiment shown, the photonic processor 20 comprises a cascade of two layers of asymmetric Mach-Zehnder interferometers (AMZI). Preferably, the first layer of AMZIs extracts completely and coherently the Rx signals Sr from the N waveguides into a single waveguide, followed by a wavelength filter 30 (e.g., a Bragg filter) to remove residual Tx signals. Most preferably, the second layer of AMZIs is configured to perform beam forming of the Tx signals St. In the embodiment shown, input light Lt from a Tx module may be processed by the second AMZI layer 22 to control the point-ahead angle, while received light Lr is output after filtering and processing by the first AMZI layer 23.

In some embodiments, each AMZI in a layer has one optical arm longer than the other to introduce an optical path difference sufficient for wavelength-selective operation between Tx and Rx signals. Preferably, all AMZIs within each layer are identical, though the two layers may employ different AMZI designs. The second layer may even utilize symmetric MZIs since it primarily handles Tx signals that have already been separated from Rx signals by the first layer.

In some embodiments, e.g. as shown in FIG 6, the coupler assembly 10 comprises an array of discrete optical couplers, configured to generate a set of separate beams for controlling the point-ahead angle. Preferably, the couplers comprise grating couplers arranged to couple light between free space and respective waveguides 15 of the PIC 100.

In the embodiment shown, the photonic processor 20 comprises a tree structure of optical components configured to route and split optical signals between the array of couplers and input/output ports for Tx/Rx signals Lt,Lr. Preferably, the tree structure includes micro-ring resonator switches arranged to provide wavelength-selective routing of optical signals. Most preferably, a filter assembly 30, e.g. comprising a Bragg filter, is further configured to separate Rx and Tx wavelengths.

In some embodiments, the coupler assembly 10 is configured to activate only one or a few couplers at a time to generate and move a Tx spot in the focal plane of a telescope, matched as closely as possible with the impulse response of the telescope. Alternatively, all couplers may be activated simultaneously to operate as an optical phased array beam scanner, though this configuration may lead to limitations in coupling efficiency due to the discrete nature of the array and challenges in achieving perfect mode matching with the telescope's impulse response in all scanning directions.

In some embodiments, the tree structure is designed to minimize optical path differences between different branches to maintain coherence between signals routed to different couplers. Preferably, the wavelength-selective routing elements are arranged to provide sufficient isolation between Tx and Rx signals while maintaining low insertion loss for the desired signal paths.

In some embodiments, e.g. as shown in FIG 7, the coupler assembly 10 comprises an array of multimode couplers 10s arranged to couple light between free space and the PIC 100. Preferably, each coupler in the array is configured to support at least two guided modes, enabling generation of spots with improved mode matching with a telescope and allowing for fine adjustment of spot positions.

In some embodiments, the optical system comprises a microlens array 11a optically coupled to the array of multimode couplers 10s. Preferably, each lens of the microlens array 11a corresponds to a unique coupler in the array 10s, with the microlens array 11a having a pitch smaller or larger than the array of couplers. Most preferably, each coupler is configured to emit/receive light optimally through its corresponding microlens. Preferably, the optical system also comprises a telecentric lens assembly 11b configured to recombine overlapping beams in a focal plane F. For example, a controllable optical field distribution as described earlier may be generated at the focal plane F of the telescope (not shown here). Preferably, the combination of multimode couplers 10s, microlens array 11a, and telecentric lens assembly 11b is designed to enable continuous beam steering between discrete beam positions. For example, the coupling efficiency for intermediate beam positions may depend on the number of modes supported by each coupler in the array.

In some embodiments, the overlapping ranges of adjacent couplers and their corresponding optical assemblies allow for continuous scanning of the point-ahead angle despite the discrete nature of the coupler array. Preferably, each multimode coupler's tuning range is designed to overlap with the range of neighboring couplers, ensuring continuous coverage of the required point-ahead angle range.

In some embodiments, e.g. for any of the embodiments described herein, the number of modes and/or couplers is selected based on a desired point-ahead angle range and/or steering resolution. Since typical laser satellite communication systems may operate with beam divergence in the range of 1-10 prad and using point-ahead angles up to approximately 100 prad for LEO satellites, a system with approximately one hundred modes or couplers may be sufficient to enable smooth and continuous adjustment of the point-ahead angle. Most preferably, this number of modes/couplers allows for steering resolution finer than the beam divergence while covering the full required angular range. In embodiments utilizing two-dimensional beam steering, the number of modes/couplers would need to be squared, significantly increasing complexity and power consumption. Therefore, one-dimensional beam steering using around one hundred modes/couplers, combined with mechanical actuation for the second dimension if needed, may provide an optimal trade-off between performance and system complexity for most practical applications.

In embodiments using the PIC for controlling the point-ahead angle PAA along one dimensional, the second dimension of beam steering may be controlled through various complementary methods. In one embodiment, the PIC 100 itself may be mounted on a motion stage to provide controlled rotation and/or translation relative to the telescope 200, allowing adjustment of the beam direction in the second dimension without compromising the quality of the optical signals. In other or further embodiments, additional optical elements may be arranged in the optical path between the PIC 100 and the telescope 200 to provide beam steering in the second dimension. For example, a Dove prism, refractive or reflective tunable optics may be used. Most preferably, since the relative motion of terminals communicating at long distances can locally be approximated by a simple translation, the second dimension of the point-ahead angle typically requires only slow adjustments to account for orbital effects, making mechanical actuation a practical solution that does not compromise the mechanical stability advantages gained from using the PIC 100 for the primary point-ahead angle control.

In principle, the PIC 100, as described herein, can be fabricated using various photonic integration platforms which may be selected based on the specific requirements of the optical system. For example, the PIC 100 may be implemented using silicon-on-insulator (SOI), silicon nitride (SiN), or indium phosphide (InP) platforms, each offering different advantages for specific components. For example, SOI platforms may be preferred for their high integration density and compatibility with CMOS fabrication processes, while SiN platforms may be chosen for their lower propagation losses and broader wavelength operation range. In other or further embodiments, InP platforms may be selected when direct integration of active components such as lasers or amplifiers is desired. For example, the choice of platform is optimized by considering factors such as the required wavelength range for Tx and Rx signals, desired propagation losses, thermal stability, and the ability to integrate active components. In some embodiments, different materials may be combined in a hybrid or heterogeneous integration approach, for example using SOI for passive components and routing while incorporating III-V materials for active components such as lasers and detectors. The fabrication process of the PIC 100, may typically use high-precision lithographic equipment to ensure accurate definition of waveguides and other optical components. Of course, also other or further fabrication techniques may be used, such as direct writing of optical circuits in a bulk piece of transparent material such as glass, et cetera.

It will be understood that while specific features may be described with reference to a specific embodiment, many of these features may interchanged, combined or split up, to achieve similar functionality. For example, the mode multiplexer/demultiplexer architecture shown in FIG 4 could be adapted for use with the slab grating coupler of FIG 5 (or vice versa), the asymmetric Mach-Zehnder interferometer cascade shown in FIG 5 could be implemented in the embodiments of FIGs 4, 6 or 7, the wavelength filtering approach using micro-ring resonators shown in FIG 4 could be applied to any of the other embodiments, and the microlens array concept of FIG 7 could be adapted to work with the discrete coupler array of FIG 6. The specific components chosen for phase shifting, wavelength filtering, mode multiplexing/demultiplexing, and beam forming may be selected and combined based on the requirements of a particular application and/or what is available for a certain platform. Furthermore, while certain embodiments show specific arrangements of waveguides and optical components, alternative layouts achieving similar functionality through different physical arrangements are possible. The number of modes, couplers, interferometers and other components may be adjusted as needed while maintaining the same basic operational principles. Additionally, while some embodiments show specific techniques for separating Tx and Rx signals, various combinations of wavelength filtering, interferometric separation, and spatial separation may be employed across the different embodiments to achieve the desired isolation between transmission and reception paths.

For the purpose of clarity and a concise description, features are described herein as part of the same or separate embodiments, however, it will be appreciated that the scope of the invention may include embodiments having combinations of all or some of the features described. For example, while embodiments were shown for controlling the point-ahead angle in one dimension using the PIC and in another dimension using mechanical actuation, also alternative ways may be envisaged by those skilled in the art having the benefit of the present disclosure for achieving a similar function and result. E.g., the filtering components, mode multiplexers, beam forming elements, and optical couplers may be combined or split up into one or more alternative components. The various elements of the embodiments as discussed and shown offer certain advantages, such as reduced size and weight, improved mechanical stability, and continuous fine adjustment of the point-ahead angle without compromising coupling efficiency. Of course, it is to be appreciated that any one of the above embodiments or processes may be combined with one or more other embodiments or processes to provide even further improvements in finding and matching designs and advantages. It is appreciated that this disclosure offers particular advantages to satellite optical communication systems requiring precise beam pointing control, and in general can be applied for any application wherein bidirectional free-space optical communication requires dynamic adjustment of transmission and reception beam directions.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. An optical system (1000) for bidirectional free-space optical, FSO, communication with a point-ahead angle (PAA) between a received, Rx, FSO beam and a transmitted, Tx, FSO beam, wherein the optical system (1000) comprises a photonic integrated circuit, PIC, (100) with
a coupler assembly (10) configured to couple a set of optical signals (St,Sr) corresponding to the FSO beams into and out of respective waveguides (15) on the PIC (100); and
a photonic processor (20) configured to apply a set of optical transformations on at least some of the set of optical signals (St,Sr);
wherein the photonic processor (20) is controllable to adjust the point-ahead angle (PAA) between the Tx and Rx FSO beams by adapting one or more of the set of optical transformations.

2. The optical system (1000) according to the preceding claim, wherein the PIC (100) comprises a filter assembly (30) configured to separate Tx optical signals (St), corresponding to the Tx FSO beam to be transmitted, and Rx optical signals (Sr), corresponding to the Rx FSO beam to be received.

3. The optical system (1000) according to the preceding claim, wherein the Rx optical signals (Sr) are routed via an Rx part (21) of the photonic processor (20) and the Tx optical signals (St) are routed via a Tx part (22) of the photonic processor (20).

4. The optical system (1000) according to the preceding claim, wherein the photonic processor (20) comprises at least one tunable optical component which is arranged in one of the Rx part (21) or Tx part (22) for applying a controllable optical transformation to one of the Rx optical signals (Sr) or the Tx optical signals (St), wherein the controllable optical transformation is configured to determine the point-ahead angle (PAA) between the Tx and Rx FSO beams.

5. The optical system (1000) according to the preceding claim, wherein the photonic processor (20) comprises a set of tunable optical components that are controllable to determine the set of optical transformations being applied to respective signal components (Cn) of at least one of the Tx optical signals (St) and Rx optical signals (Sr), wherein a combination (ΣCn) of the respective signal components (Cn) corresponds to an optical field distribution at an optical interface (10s) of the coupler assembly (10).

6. The optical system (1000) according to the preceding claim, wherein the respective signal components (Cn) of the Tx optical signals (St) are controlled to optimize a correspondence between a resulting optical field distribution at the optical interface (10s) and a target optical field distribution (T) corresponding to the Tx FSO beam being emitted at an angle of emission corresponding to a target point-ahead angle (PAA).

7. The optical system (1000) according to any of the two preceding claims, wherein the respective signal components (Cn) of the Rx optical signals (Sr) are controlled to optimize measurement of an incident optical field distribution at the optical interface (10s) corresponding to the Rx FSO beam being received at an angle of incidence, wherein a difference between the angle of emission and the angle of incidence corresponds to a target point-ahead angle (PAA).

8. The optical system (1000) according to any of the three preceding claims, wherein a respective phase and/or amplitude of each of the respective signal components (Cn) is controlled to interferometrically combine the respective signal components (Cn) at the optical interface (10s) to create the resulting optical field distribution for generating the Tx FSO beam and/or to optimize detection of the incident optical field distribution of the Rx FSO beam.

9. The optical system (1000) according to any of the preceding claims, wherein the same optical interface (10s) is configured to receive at least part of the Rx FSO beam and transmit at least part of the Tx FSO beam, wherein the optical interface (10s) is integrated as part of the PIC (100).

10. The optical system (1000) according to any of the preceding claims, wherein the angle of emission of the Tx FSO beam is controlled by controlling an intensity distribution of an optical field at an optical interface (10s) of the PIC (100).

11. The optical system (1000) according to any of the preceding claims, wherein the angle of emission of the Tx FSO beam is controlled by controlling a phase distribution of the optical field at the optical interface (10s).

12. The optical system (1000) according to any of the preceding claims wherein the coupler assembly (10) comprises at least one multimode coupler (12) and a mode multiplexer/demultiplexer (13), wherein the multimode coupler (12) is configured to support a plurality of guided modes as signal components (Cn) of the Tx FSO beam and/or Rx FSO beam, wherein the mode multiplexer/demultiplexer (13) is configured to couple different guided modes of the multimode coupler (12) into and out of different waveguides (15) of the PIC (100), wherein the guided modes comprise transverse electric modes of different orders, wherein the coupler assembly (10) comprises an optical interface (10s) that comprises a coupling surface of the multimode coupler (12), wherein the coupling surface is arranged to couple light between the guided modes and free space, wherein an optical field distribution at the optical interface (10s) corresponds to an interferometric combination of the guided modes, wherein the photonic processor (20) is configured to control relative phases and/or amplitudes of the guided modes via the respective waveguides (15) to shape the optical field distribution at the coupling surface to adjust the point-ahead angle (PAA) between the Tx and Rx FSO beams.

13. The optical system (1000) according to the preceding claim, wherein the coupler assembly (10) comprises an optical interface (10s) configured to receive the Rx FSO beam at symmetric incidence, and transmit the Tx FSO beam at a variable angle of emission in accordance with the point-ahead angle (PAA), wherein the multimode coupler (12) is configured to support a set of even-order modes and a set of odd-order modes as part of the plurality of guided modes, wherein the mode multiplexer/demultiplexer (13) is configured to separate and/or combine each mode of the plurality of guided modes into and/or out of a respective waveguide (15), wherein the photonic processor (20) is configured to control relative contributions of the odd-order modes and even-order to control a position and/or phase of the optical field distribution along the coupling surface, thereby controlling the variable angle of emission of the Tx FSO beam, wherein the even-order modes are combined for detection of the Rx FSO beam received at symmetric normal incidence.

14. The optical system (1000) according to the preceding claim, wherein the coupler assembly (10) comprises a multimode slab edge coupler and a mode multiplexer/demultiplexer (13), wherein the slab edge coupler comprises a slab waveguide configured to support a plurality of guided modes as signal components (C0-C7) of the Tx FSO beam and/or Rx FSO beam, wherein the mode multiplexer/demultiplexer (13) comprises at least one adiabatic taper and evanescent mode demultiplexers configured to extract a set of lowest order guided modes into respective waveguides (15), wherein the guided modes comprise transverse electric modes of different orders, wherein the mode multiplexer/demultiplexer (13) is configured to separate odd-order modes and even-order modes of the guided modes into different sets of the waveguides (15), wherein the coupler assembly (10) comprises an optical interface (10s) that comprises an edge surface of the slab waveguide, wherein the edge surface is arranged to couple light between the guided modes and free space, wherein the optical system (1000) comprises a cylindrical lens optically coupled to the edge surface and configured to match a numerical aperture of the slab edge coupler with a telescope (200), wherein an optical field distribution at the optical interface (10s) corresponds to an interferometric combination of the guided modes.

15. A method for controlling bidirectional free-space optical, FSO, communication with a point-ahead angle (PAA) between a received, Rx, FSO beam and a transmitted, Tx, FSO beam using a photonic integrated circuit, PIC, (100), the method comprising:
coupling a set of optical signals (St,Sr) corresponding to the FSO beams into and out of respective waveguides (15) on the PIC (100) using a coupler assembly (10);
applying a set of optical transformations on at least some of the set of optical signals (St,Sr) using a photonic processor (20); and
adjusting the point-ahead angle (PAA) between the Tx and Rx FSO beams by controlling the photonic processor (20) to adapt one or more of the set of optical transformations.
